# EUROPÄISCHE PATENTANMELDUNG

(11) **EP 2 315 341 A1**
(43) Veröffentlichungstag der Anmeldung: **27.04.2011**
(21) Anmeldenummer: 09013366.1
(22) Anmeldetag: 22.10.2009
(51) Int. Cl.: H02M 3/158, H02M 7/219, H02H 3/18

(54) **Spannungswandler, Spannungsversorgungsschaltung und Verfahren zum Betrieb eines Spannungswandlers**

(71) Anmelder: Fraunhofer-Gesellschaft zur Förderung der angewandten Forschung e.V., 80686 München (DE)
(72) Erfinder: Pollak, Markus, 91058 Erlangen (DE); Spies, Peter, 91074 Herzogenaurach (DE)
(74) Vertreter: Burger, Markus

(57) **Zusammenfassung**

Ein Gleichspannung-zu-Gleichspannung-Spannungswandler zum Bereitstellen einer Ausgangs-Gleichspannung basierend auf einer Eingangs-Gleichspannung umfasst eine eingangsseitige geschaltete Gleichrichter-Schaltung, die ausgelegt ist, um basierend auf der Eingangs-Gleichspannung und unabhängig von einer Polarität der Eingangs-Gleichspannung eine Gleichrichter-Ausgangsspannung mit einer vorgegebenen Polarität bereitzustellen. Die geschaltete Gleichrichter-Schaltung umfasst durch Schalterbauteile überbrückbare Gleichrichter-Bauteile. Die Spannungswandlerschaltung umfasst ferner eine Spannungswandlerschaltung, die ausgelegt ist, um die Ausgangs-Gleichspannung basierend auf der Gleichrichter-Ausgangsspannung bereitzustellen.

Der Spannungswandler eignet sich, um in Verbindung mit einem Energiewandler eine Spannungsversorgungsschaltung zu bilden.

## Beschreibung

### Hintergrund der Erfindung

Ausführungsbeispiele gemäß der Erfindung beziehen sich auf einen Gleichspannung-zu-Gleichspannung-Spannungswandler (DC/DC-Spannungswandler), auf eine Spannungsversorgungsschaltung und auf ein Verfahren zum Betrieb eines Gleichspannung-zu-Gleichspannung-Spannungswandlers.

Ein Ausführungsbeispiel der Erfindung betrifft einen polaritätsunabhängigen DC/DC-Aufwärtswandler.

Energiewandler, wie z.B. Thermogeneratoren, liefern in vielen Fällen geringe Ausgangsspannungen bei geringen Temperaturunterschieden. Deshalb werden üblicherweise Gleichspannung-zu-Gleichspannung-Wandler (auch als DC/DC-Wandler bekannt) zur Anpassung an eine Last nachgeschaltet. Je nach Richtung des Temperaturgradienten kann dabei die Ausgangsspannung der Energiewandler (z.B. Thermogeneratoren) positiv oder negativ sein. Da bei Thermogeneratoren die Polarität der Ausgangsspannung abhängig von der Richtung des anliegenden Temperaturgradienten ist, wird somit ein Wandler für negative und positive Eingangsspannungen benötigt. Typischerweise wird im Übrigen zur Anpassung an die Last ein DC/DC-Aufwärtswandler benötigt, der auch bei niedrigen Eingangsspannungen einen hohen Wirkungsgrad aufweist. Soll der Wandler zusätzlich noch unabhängig von der Polarität mit einer Eingangsspannung arbeiten können, braucht man eine Art "Gleichrichterschaltung" vor dem Eingang des DC/DC-Wandlers. Ein herkömmlicher Brückengleichrichter mit Schottky-Dioden würde jedoch insbesondere bei Eingangsspannungen unter 1 V zu hohen Verlusten führen.

Im Folgenden werden einige herkömmliche Problemlösungen beschrieben. Bei Energiequellen wie Thermogeneratoren, Brennstoffquellen oder Solarzellen wird wegen ihrer geringen Ausgangsspannung üblicherweise ein DC/DC-Aufwärtswandler zur Erzeugung einer höheren Versorgungsspannung für die Last verwendet. Um Verluste des Wandlers zu minimieren, können bei Brennstoffzellen und Solarzellen beispielsweise auch leicht mehrere kleine Elemente in Serie geschaltet werden. Bei Thermogeneratoren, die den Seebeck-Effekt nutzen, sind die einzelnen Thermoelemente aber nicht (oder nur schwer) in ihrer Größe reduzierbar, ohne gleichzeitig eine Verschlechterung ihrer Eigenschaften zu erhalten. Im Gesamten müsste beispielsweise ein höheres Bauvolumen des Generators in Kauf genommen werden, was auch zu höheren Kosten führen würde. Hier ist es zweckmäßiger, DC/DC-Wandler einzusetzen, die auch bei Eingangsspannungen unter 1 Volt einen hohen Wirkungsgrad aufweisen. Es gibt jedoch bei solchen Eingangsspannungen herkömmlicherweise keine sinnvolle Möglichkeit, Thermogeneratoren unabhängig von der Richtung ihres Temperaturgradienten, d.h. unabhängig von der Polarität ihrer Ausgangsspannung, zu betreiben. Übliche, mit Schottky-Dioden aufgebaute Brückengleichrichter würden hier den gesamten Wirkungsgrad typischerweise um mehr als 50% reduzieren.

In Anbetracht der obigen Ausführungen ist es die Aufgabe der vorliegenden Erfindung, ein Konzept zur Gleichspannung-zu-Gleichspannung-Wandlung zu schaffen, das auch bei betragsmäßig niedriger Eingangs-Gleichspannung unabhängig von der Polarität der Eingangs-Gleichspannung einen guten Wirkungsgrad bietet.

### Zusammenfassung der Erfindung

Ein Ausführungsbeispiel gemäß der vorliegenden Erfindung schafft einen Gleichspannung-zu-Gleichspannung-Wandler zum Bereitstellen einer Ausgangsgleichspannung basierend auf einer Eingangs-Gleichspannung. Der Spannungswandler umfasst eine eingangsseitige geschaltete Gleichrichterschaltung, die ausgelegt ist, um basierend auf der Eingangs-Gleichspannung und unabhängig von einer Polarität der Eingangs-Gleichspannung eine Gleichrichter-Ausgangsspannung mit einer vorgegebenen Polarität bereitzustellen. Die geschaltete Gleichrichterschaltung umfasst dabei durch Schalterbauteile überbrückbare Gleichrichterbauteile. Der Spannungswandler umfasst ferner eine Spannungswandlerschaltung, die ausgelegt ist, um die Ausgangsgleichspannung basierend auf der Gleichrichter-Ausgangsspannung bereitzustellen.

Dieses Ausführungsbeispiel gemäß der Erfindung basiert auf der Erkenntnis, dass ein Wirkungsgrad gerade bei einem niedrigen Betrag der Eingangs-Gleichspannung (beispielsweise unterhalb von 2 V, oder sogar unterhalb von 1 V, und in manchen Fällen sogar unterhalb von 500mV) durch die Verwendung eines eingangsseitigen geschalteten Gleichrichters, bei dem Gleichrichterbauteile durch Schalterbauteile überbrückbar sind, verbessert werden kann. Durch die Überbrückung der Gleichrichterbauteile der eingangsseitigen Gleichrichterschaltung, die eine Unabhängigkeit von der Polarität der Eingangs-Gleichspannung ermöglicht, wird ein Spannungsabfall über den Gleichrichterbauteilen verringert, wodurch es gerade bei niedrigem Betrag der Eingangs-Gleichspannung (bei dem der Spannungsabfall über den Gleichrichterbauteilen typischerweise 10% oder mehr des Betrags der Eingangs-Gleichspannung ausmacht) zu einer deutlichen Verbesserung des Wirkungsgrads im Vergleich zu herkömmlichen Gleichrichterschaltungen ohne überbrückbare Gleichrichterbauteile kommt.

Bei einem bevorzugten Ausführungsbeispiel ist die Spannungswandlerschaltung somit eine Aufwärts-Spannungswandlerschaltung, die ausgelegt ist, um die Ausgangs-Gleichspannung so bereitzustellen, dass die Ausgangs-Gleichspannung betragsmäßig größer als die Eingangs-Gleichspannung ist. Gerade bei derartigen Schaltungen, bei denen die Eingangs-Gleichspannung vergleichsweise klein ist, ergibt sich durch das erfindungsgemäße Konzept, eingangsseitig eine geschaltete Gleichrichterschaltung zu verwenden, eine besonders deutliche Verbesserung des Wirkungsgrads.

Bei einem bevorzugten Ausführungsbeispiel ist die Spannungswandlerschaltung ausgelegt, um die Ausgangs-Gleichspannung (beispielsweise eine Nenn-Ausgangsgleichspannung) bereits bei einer Eingangs-Gleichspannung mit einem Betrag von nicht mehr als 1 V bereitzustellen. Bei derartigen Spannungswandlerschaltungen macht sich der herkömmlicherweise auftretende Spannungsabfall über Gleichrichterbauteilen der eingangsseitigen Gleichrichterschaltung ganz besonders deutlich bemerkbar, und die WirkungsgradVerbesserung durch die Überbrückung der Gleichrichterbauteile fällt ganz besonders deutlich aus.

Bei einem bevorzugten Ausführungsbeispiel umfasst die geschaltete Gleichrichterschaltung eine Gleichrichterbrücke, die zwischen Zuführungen (bzw. Anschlüsse) für die Eingangs-Gleichspannung (Eingangs-Gleichspannungs-Zuführungen) und Leitungen (bzw. Anschlüsse) für die Gleichrichter-Ausgangsspannung geschaltet ist. Die Brückenzweige der Gleichrichterbrücke umfassen dabei jeweilige Dioden (die den Brückenzweigen zugeordnet sind) und ferner steuerbare Schalterbauteile. Die steuerbaren Schalterbauteile sind dabei bevorzugt ausgelegt, um die jeweiligen Dioden in schaltbarer Weise zu überbrücken, um im eingeschalteten Zustand einen Spannungsabfall über dem Brückengleichrichter im Vergleich zu einem ausgeschalteten Zustand zu verringern. Die Kombination einer Brückengleichrichteranordnung, die jeweilige Dioden umfasst, mit steuerbaren Schalterbauteilen, durch die die jeweiligen Dioden selektiv überbrückt werden können, ermöglicht es, dass eine gewisse (wenn auch durch den Spannungsabfall über den Dioden beeinträchtigte) Gleichrichter-Ausgangsspannung selbst dann bereitgestellt wird, wenn die steuerbaren Schalterbauteile ausgeschaltet sind, wenn also beispielsweise eine Ansteuerschaltung für die steuerbaren Schalterbauteile noch inaktiv ist. Somit steht eine gewisse, wenn auch durch den Spannungsabfall (bzw. die Spannungsabfälle) über die Dioden der Brückengleichrichteranordnung verringerte, Gleichrichter-Ausgangsspannung auch bei ausgeschalteten Schalterbauteilen zur Verfügung, was beispielsweise ein Anlaufverhalten des Spannungswandlers erheblich verbessert. Bei eingeschalteten Schalterbauteilen verringert sich der Spannungsabfall über der Gleichrichterschaltung weiter.

Bei einem bevorzugten Ausführungsbeispiel sind die Schalterbauteile der Gleichrichterschaltung selbstsperrende MOS-Feldeffekttransistoren. In diesem Fall umfasst der Spannungswandler bevorzugt eine Gleichrichter-Ansteuerschaltung, die ausgelegt ist, um in Abhängigkeit von einer Polarität der Eingangs-Gleichspannung MOS-Feldeffekttransistoren in zwei Brückenzweigen, die einer ersten Polarität der Eingangs-Gleichspannung zugeordnet sind, oder MOS-Feldeffekttransistoren in zwei anderen Brückenzweigen, die einer zweiten Polarität der Eingangs-Gleichspannung zugeordnet sind, in einen eingeschalteten Zustand zu versetzen. Die Verwendung von selbstsperrenden MOS-Feldeffekttransistoren hat dabei den Vorteil, dass diese in einem Grundzustand inaktiv sind und somit das Verhalten der Gleichrichterbrücke zunächst (bei inaktiver Gate-Ansteuerung) ungestört lassen. Erst bei aktiver Ansteuerung durch die Gleichrichter-Ansteuerschaltung bewirken die MOS-Feldeffekttransistoren somit eine wohl kontrollierte Überbrückung der zu überbrückenden Gleichrichterdioden (wobei freilich nur die Gleichrichterdioden zu überbrücken sind, die bei der gegebenen Polarität der Eingangs-Gleichspannung ohne Überbrückung leitend bzw. in Vorwärts-Polung sind).

Bei einem bevorzugten Ausführungsbeispiel ist die Gleichrichter-Ansteuerschaltung ausgelegt, um von der Spannungswandlerschaltung eine auf der Gleichrichter-Ausgangsspannung basierende Versorgungsspannung zu empfangen, so dass ein Versorgungspotential der Gleichrichter-Ansteuerschaltung oberhalb der an den Eingangs-Gleichspannungs-Zufiihrungen anliegenden Potentiale ist, oder so dass ein Versorgungspotential der Gleichrichter-Ansteuerschaltung unterhalb der an den Eingangs-Gleichspannungs-Zuführungen anliegenden Potentiale ist. Die Gleichrichter-Ansteuerschaltung ist dabei ausgelegt, um an einen Steueranschluss eines einzuschaltenden MOS-Feldeffekttransistors, der als steuerbares Schalterbauteil eines Brückenzweiges wirkt, ein Ansteuerpotential anzulegen, das oberhalb der an den Eingangs-Gleichspannungs-Zuführungen anliegenden Potentiale oder unterhalb der an dem Eingangs-Gleichspannungs-Zuführungen anliegenden Potentiale liegt. Durch die Bereitstellung entsprechender Ansteuerpotentiale für die Ansteuerung des einzuschaltenden MOS-Feldeffekttransistors (bzw. der einzuschaltenden MOS-Feldeffekttransistoren) wird erreicht, dass der einzuschaltende MOS-Feldeffekttransistor in einen besonders niederohmigen Zustand versetzt wird. Es wurde nämlich erkannt, dass sich ein besonders niederohmiger Zustand des einzuschaltenden MOS-Feldeffekttransistors (beispielsweise eines selbstsperrenden MOSFET) erzielen lässt, indem ein Ansteuerpotential an diesen angelegt wird, das oberhalb des oberen der an den Eingangs-Gleichspannungs-Zuführungen anliegenden Potentiale oder unterhalb des unteren der an den Eingangs-Gleichspannungs-Zuführungen anliegenden Potentiale liegt. Steuert man hingegen einen selbstsperrenden MOS-Feldeffekttransistor (der die oben genannten Vorteile aufweist) mit einem Ansteuerpotential an, das zwischen dem unteren der an den Eingangs-Gleichspannungs-Zuführungen anliegenden Potentiale und einem oberen der an den Eingangs-Gleichspannungs-Zuführungen anliegenden Potentiale liegt, so würden die MOS-Feldeffekttransistoren einen vergleichsweise hohen Ein-Widerstand und einen daraus resultierenden vergleichsweise hohen Spannungsabfall aufweisen bzw. verursachen.

Bei einem bevorzugten Ausführungsbeispiel weist die Gleichrichter-Ansteuerschaltung des Spannungswandlers einen Komparator auf, der ausgelegt ist, um eine Polarität der Eingangs-Gleichspannung zu bestimmen. Der Komparator ist bevorzugt ferner ausgelegt, um ein erstes Paar der steuerbaren Schalter in zwei Brückenzweigen (der Gleichrichterschaltung), die einer ersten Polarität der Eingangs-Gleichspannung zugeordnet sind, und ein zweites Paar der steuerbaren Schalter in zwei Brückenzweigen, die einer zweiten Polarität der Eingangs-Gleichspannung zugeordnet sind, über zwei zueinander invertierte Komparator-Ausgänge anzusteuern. Auf diese Weise ist eine schaltungstechnisch sehr effiziente Realisierung der Ansteuerschaltung für die steuerbare Gleichrichterschaltung möglich.

Bei einem bevorzugten Ausführungsbeispiel ist der Spannungswandler so ausgelegt, dass die geschaltete Gleichrichterschaltung in einer Anlaufphase als ungeschaltete Gleichrichterschaltung wirkt, und so dass die geschaltete Gleichrichterschaltung nach der Anlaufphase als geschaltete Gleichrichterschaltung wirkt. Dadurch wird erreicht, dass ein Anlaufen des Spannungswandlers sehr einfach möglich ist, ohne dass beispielsweise die Ansteuerschaltung der geschalteten Gleichrichterschaltung sofort aktiv ist. Durch die Tatsache, dass ein Anlaufen des Spannungswandlers auch ohne aktive Ansteuerschaltung der geschalteten Gleichrichterschaltung möglich ist, wird zudem die Möglichkeit geschaffen, die Ansteuerschaltung der geschalteten Gleichrichterschaltung unter Verwendung der durch die Spannungswandlerschaltung gelieferten Ausgangs-Gleichspannung zu versorgen. Dadurch ist es wiederum möglich, dass der Ansteuerschaltung der geschalteten Gleichrichterschaltung eine Versorgungsspannung zur Verfügung steht, die betragsmäßig größer ist als die Eingangs-Gleichspannung. Dadurch wird wiederum ermöglicht, die steuerbaren Schalterbauteile mit Ansteuerpotentialen anzusteuern, die oberhalb des oberen der an den Eingangs-Gleichspannungs-Zuführungen anliegenden Potentiale bzw. unterhalb des unteren der an den Eingangs-Gleichspannungs-Zuführungen anliegenden Potentiale liegen. Dies wiederum ermöglicht es, beispielweise selbstsperrende MOS-Feldeffekttransistoren in einen besonders niederohmigen Betriebsbereich zu versetzen.

Bei einem weiteren bevorzugten Ausführungsbeispiel umfasst der Spannungswandler einen ausgangsseitigen Schalter, der ausgelegt ist, um den Spannungswandler ausgangsseitig von einer Nutzlast abzutrennen (bzw. den Spannungswandler ausgangsseitig mit der Nutzlast zu verbinden). Der Spannungswandler ist dabei bevorzugt so ausgelegt, dass in der Anlaufphase der ausgangsseitige Schalter geöffnet ist Ferner ist der Spannungswandler bevorzugt ausgelegt, um den ausgangsseitigen Schalter erst dann zu schließen, wenn eine durch die Spannungswandlerschaltung bereitgestellte Versorgungsspannung ausreichend ist, um die Ansteuerschaltung zum Ansteuern der Schalterbauteile der geschalteten Gleichrichterschaltung zu betreiben, um die Schalterbauteile zu aktivieren. Durch eine derartige Ausgestaltung wird es ermöglicht, dass die ausgangsseitige Last erst dann mit der Spannungswandlerschaltung verbunden wird, wenn auch die geschaltete Gleichrichteranordnung betriebsbereit ist, wenn also die Versorgungsspannung für die Ansteuerschaltung der geschalteten Gleichrichterschaltung ausreichend ist, um die Schalterbauteile der geschalteten Gleichrichterschaltung einzuschalten. Somit wird vermieden, dass die Last ausgangsseitig sofort, das heißt bereits während der Anlaufphase, mit der Spannungswandlerschaltung verbunden ist, was zu einem hohen Spannungsabfall über der geschalteten Gleichrichterschaltung führen würde, solange die Schalterbauteile der geschalteten Gleichrichteranordnung noch inaktiv sind (also während der Startphase). Somit wird insgesamt durch eine verzögerte Anschaltung der Last an den Ausgang der Spannungswandlerschaltung ein Anlaufverhalten des Spannungswandlers deutlich verbessert.

Eine solche Verbesserung wird beispielsweise besonders deutlich, wenn die Ansteuerschaltung des geschalteten Gleichrichters ausgelegt ist, um die Ansteuersignale für die Schalterbauteile basierend auf den durch den Spannungswandler bereitgestellten Versorgungspotentialen bereitzustellen.

Ein bevorzugtes Ausführungsbeispiel der Erfindung schafft eine Spannungsversorgungsschaltung mit dem oben erläuterten Spannungswandler. Die Spannungsversorgungsschaltung umfasst ferner einen Energiewandler, beispielsweise einen Thermogenerator, der ausgelegt ist, um die Eingangs-Gleichspannung für den Spannungswandler zu liefern, wobei der Energiewandler so ausgelegt ist, dass eine Polarität der Eingangs-Gleichspannung abhängig von Umwelteinflüssen (z.B. von einer Richtung eines an dem Thermogenerator anliegenden Temperaturgradienten) ist. In diesem Fall bietet die erfindungsgemäße Spannungsversorgungsschaltung mit einer eingangsseitigen geschalteten Gleichrichterschaltung einen besonders hohen Wirkungsgrad.

Ein Ausführungsbeispiel gemäß der Erfindung schafft im Übrigen ein Verfahren zum Betrieb eines Gleichspannung-zu-Gleichspannung-Spannungswandlers. Dieses Verfahren weist die Funktionalität und die Vorteile der erfindungsgemäßen Vorrichtung auf.

### Figurenkurzbeschreibung

Ausführungsbeispiele der vorliegenden Erfindung werden nachfolgend Bezug nehmend auf die beiliegenden Figuren näher erläutert. Es zeigen:
- Fig. 1: ein Blockschaltbild eines erfindungsgemäßen Spannungswandlers, gemäß einem Ausführungsbeispiel der vorliegenden Erfindung;
- Fig. 2: ein Blockschaltbild eines erfindungsgemäßen Spannungswandlers, gemäß einem zweiten Ausführungsbeispiel der vorliegenden Erfindung;
- Fig. 3: ein detailliertes Schaltbild eines Spannungswandlers, gemäß einem dritten Ausführungsbeispiel der vorliegenden Erfindung;
- Fig. 4: eine schematische Darstellung der zeitlichen Abläufe beim Start eines erfin- dungsgemäßen Spannungswandlers;
- Fig. 5: ein detailliertes Schaltbild eines Spannungswandlers gemäß einem vierten Ausführungsbeispiel der vorliegenden Erfindung;
- Fig. 6a,6b: grafische Darstellung von Signalen, die beim Betrieb des Spannungswand- lers gemäß Fig. 5 auftreten; und
- Fig. 7: ein Flussdiagramm eines Verfahrens zum Betrieb eines Gleichspannung-zu- Gleichspannung-Spannungswandlers, gemäß einem Ausführungsbeispiel der Erfindung.

### Detaillierte Beschreibung der Ausführungsbeispiele

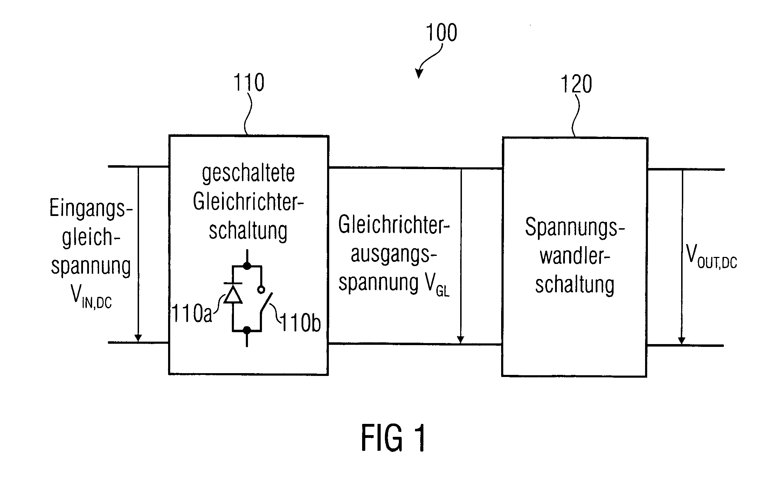

### Spannungswandler gemäß Fig. 1

Fig. 1 zeigt ein Blockschaltbild eines Gleichspannung-zu-Gleichspannung-Spannungswandlers 100 gemäß einem ersten Ausführungsbeispiel der Erfindung. Der Gleichspannung-zu-Gleichspannung-Spannungswandler 100 ist ausgelegt, um eine Eingangsgleichspannung V_{IN},_{DC} (im Folgenden auch kurz als VIN bezeichnet) zu empfangen und basierend darauf, eine Ausgangsgleichspannung V_{OUT,DC} (im Folgenden auch kurz als VOUT bezeichnet) bereitzustellen. Der Spannungswandler 100 umfasst eine eingangsseitige geschaltete Gleichrichterschaltung 110, die ausgelegt ist, um die Eingangsgleichspannung V_{IN,DC} zu empfangen. Die geschaltete Gleichrichterschaltung 110 ist ferner ausgelegt, um, basierend auf der Eingangsgleichspannung V_{IN,DC} und unabhängig von einer Polarität der Eingangsgleichspannung V_{IN,DC} eine Gleichrichter-Ausgangsspannung *VGL* mit einer vorgegebenen (festen) Polarität bereitzustellen. Die geschaltete Gleichrichterschaltung 110 umfasst durch Schalterbauteile 110B (z.B. MOS-Feldeffekttransistoren) überbrückbare Gleichrichterbauteile 110A (z.B. Dioden).

Der Spannungswandler 100 umfasst ferner eine Spannungswandlerschaltung 120, die ausgelegt ist, um die Ausgangsgleichspannung V_{OUT,DC}, basierend auf der Gleichrichter-Ausgangsspannung _{VGL} bereitzustellen.

Im Hinblick auf die Funktionalität der Spannungswandlerschaltung 110 ist festzuhalten, dass die geschaltete Gleichrichterschaltung 110 ermöglicht, Eingangsgleichspannungen V_{IN,DC} unterschiedlicher Polarität zu verarbeiten, wobei die Gleichrichterausgangsspannung *VGL* immer eine vorgegebene Polarität aufweist. Zu dieser Gleichrichtung tragen unter anderem die Gleichrichterbauteile 110A bei. Da allerdings die Gleichrichterbauteile 110A der geschalteten Gleichrichterschaltung 110 an sich typischerweise einen nicht unerheblichen Spannungsabfall verursachen, der sich besonders bei einer vergleichsweise niedrigen Eingangsgleichspannung V_{IN,DC} (beispielsweise im Bereich von unter einem Volt) deutlich bemerkbar macht, sind die Gleichrichterbauteile 110 A durch steuerbaren Schalterbauteile überbrückbar. Verluste, die in dem Gleichrichterbauteil 110A der geschalteten Gleichrichterschaltung 110 auftreten würden, werden durch die schaltbare Überbrückung der Gleichrichterbauteile verringert bzw. eliminiert. So sind nämlich typischerweise die Schalterbauteile 110B so ausgelegt, dass sie bei einem bestimmten Stromfluss in eingeschaltetem Zustand einen deutlich niedrigeren Spannungsabfall (beispielsweise einen um einen Faktor von zwei niedrigeren Spannungsabfall, oder sogar einen um einen Faktor 10 niedrigeren Spannungsabfall) als die überbrückten Gleichrichterbauteile 110A an sich aufweisen. Somit sinkt die Verlustleistung in der geschalteten Gleichrichterschaltung 110, sobald die Schalterbauteile eingeschaltet sind. Damit erzielt der Spannungswandler 100 im Vergleich zu den herkömmlichen Spannungswandlern einen deutlich verbesserten Wirkungsgrad.

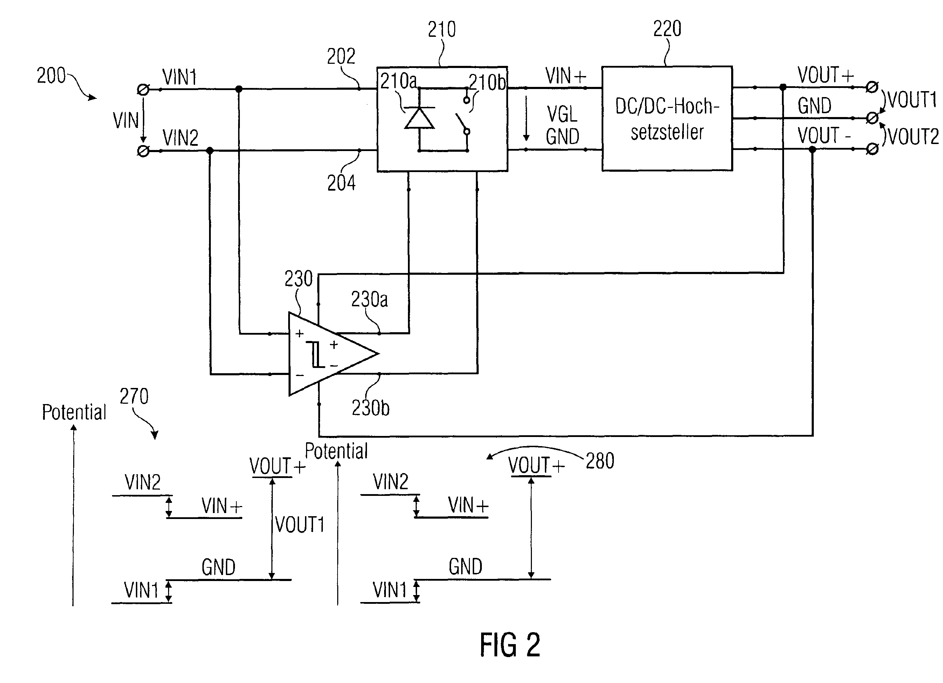

### Ausführungsbeispiele gemäß der Figur 2

Fig. 2 zeigt ein Blockschaltbild eines Spannungswandlers 200, gemäß einem zweiten Ausführungsbeispiel der vorliegenden Erfindung. In anderen Worten, Fig. 2 zeigt das Schaltungskonzept eines "bipolaren" DC/DC-Aufwärtswandlers. Das vorgeschlagene Schaltungskonzept, das in der Fig. 2 gezeigt ist, besteht aus einem DC/DC Aufwärtswandler 220, der an einem Gleichrichter 210 angeschlossen ist. Dieser Gleichrichter 210 besteht beispielsweise aus einer Brücke von vier Dioden 210A, denen jeweils ein Schalterelement 210B parallel geschaltet ist. Die Schalter 210B (auch als "Schalterelement" oder "Schalterbauteil" bezeichnet) werden beispielsweise paarweise über zwei zueinander invertierte Ausgänge 230A, 230B eines Komparators 230 angesteuert. Der Komparator vergleicht die Spannung (bzw. die Potentiale VIN1, VIN2) an den beiden Eingangspins 202, 204 des Gleichrichters 210, an den der DC/DC-Wandler 220 gekoppelt ist. Dieser Wandler 220 stellt beispielsweise gegenüber seinem Massepotential GND eine positive Versorgungsspannung V_{OUT+} und eine negative Versorgungsspannung V_{OUT}- für den Komparator 230 bereit. Diese Spannungen sind bevorzugt betragsmäßig mindestens so groß wie die Eingangsspannung der gesamten Schalter (beispielsweise die Potentialdifferenz zwischen den Potentialen VIN1 an den ersten Eingangspin 202 der Gleichrichterschaltung 210 und dem Potential VIN2 an dem zweiten Eingangspin 204 der Gleichrichterschaltung 210) plus der Schwellenspannung der Schalter 210B der Gleichrichterbrücke 210. Kann der Komparator 230 nicht bis zu seiner vollen Betriebsspannungsgrenze (also beispielsweise bis zu den Potentialen VOUT+ bzw. VOUT-) ausgesteuert werden, so ist es bevorzugt, dass die Versorgungsspannungen (die zum Beispiel durch die Potentiale VOUT+, GND und VOUTdefiniert sind) entsprechend höher gewählt werden. Die Versorgungsspannungen (z.B. die Potentiale VOUT+, VOUT-, bezogen auf das Bezugspotential GND) stellen gleichzeitig die Ausgangsspannungen VOUT1, VOUT2 der gesamten Schaltungsanordnung (bzw. des Spannungswandlers 200) dar. Da sie bevorzugt betragsmäßig also größer sein sollten als die Eingangsspannung VIN, sollte der beschriebenen Gleichrichter 210 bevorzugt nicht ohne den nachgeschalteten Aufwärtswandler 220 betrieben werden.

Im Folgenden werden kurz die auftretenden Potentialverhältnisse anhand einer ersten schematischen Darstellung 270 und anhand einer zweiten schematischen Darstellung 280 erläutert. Die schematische Darstellung 270 gilt für den Fall, dass die Eingangs-Gleichspannung VIN eine positive Polarität aufweist, dass also das Potential VIN1 oberhalb des Potentials VIN2 liegt. In diesem Fall liegt das Potential VIN+ an einem ersten Ausgang der Gleichrichterschaltung 210 etwas unterhalb des Potentials VIN1, wobei der Unterschied zwischen den Potentialen VIN1 und VIN+ durch einen ersten Spannungsabfall über der Gleichrichterschaltung 210 bedingt ist. Das Potential GND, das an einem zweiten Ausgang der Gleichrichterschaltung anliegt, liegt etwas oberhalb des Potentials VIN2, wobei der Potentialunterschied in den Potentialen VIN2 und GND durch einen zweiten Spannungsabfall an der Gleichrichterschaltung 210 bedingt ist. Ferner zeigt die schematische Darstellung 270 auch das Potential VOUT+, das im Falle eines Aufwärtswandlers 220 oberhalb des Potentials VIN+ liegt. Geht man davon aus, dass für das Ansteuern der Schalterbauteile 210B der Gleichrichterschaltung 210 ein Potential erforderlich ist, das zumindest um den Betrag der Schwellenspannung der Schalterbauteile (z.B. selbstsperrenden n-Kanal MOS-Feldeffekttransistoren) oberhalb des Potentials VIN1 liegt, so wird ersichtlich, dass es wünschenswert ist, dass das Potential VOUT+ oberhalb des Potentials VIN1 liegt. Um wie viel das Potential VOUT+ oberhalb des Potentials VIN1 liegen sollte, hängt unter anderem von der Schwellenspannung der als Schalterbauteile verwendeten MOS-Feldeffekttransistoren und dem minimalen Spannungsabfall in dem Ausgangszweig des Komparators 230 ab. Alternativ dazu ist es allerdings auch möglich, dass als Schalterbauteile 210 beispielsweise selbstsperrende p-Kanal MOS-Feldeffekitransistoren verwendet werden, so dass dann das Potential VOUT- unterhalb des Potentials VIN2 liegen sollte, um die Bereitstellung eines geeigneten Ansteuerpotentials für die p-Kanal MOS-Feldeffekttransistoren zu ermöglichen.

Ein Beispiel mit umgekehrter Polarität der Eingangsspannung VIN ist in einer schematischen Darstellung bei Bezugszeichen 280 gezeigt. Hierbei ist es empfehlenswert, dass das Potential VOUT+ oberhalb des Potentials VIN2 (und auch des Potentials VIN1) liegt, falls als Schalterbauteile 210B selbstsperrende n-Kanal-Feldeffekttransistoren verwendet werden. Andererseits ist es empfehlenswert, dass das Potential VOUT- unterhalb des Potentials VIN1 (und auch unterhalb des Potentials VIN2) liegt, falls als Schalterbauteile 210B selbstsperrende p-Kanal-Feldeffekttransistoren verwendet werden.

Aus der obigen Erläuterung ist ersichtlich, dass es zur geeigneten Ansteuerung der geschalteten Gleichrichterschaltungen 210 vorteilhaft ist, einen Aufwärtswandler 220 zu verwenden.

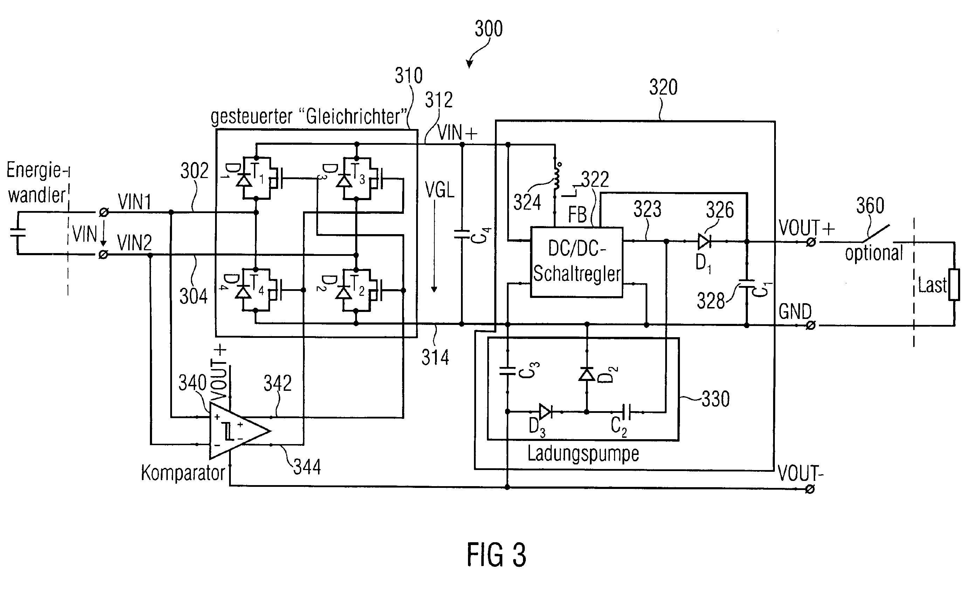

### Ausführungsbeispiel gemäß der Figur 3

Fig. 3 zeigt ein detailliertes Schaltbild eines Spannungswandlers gemäß einem Ausführungsbeispiel der vorliegenden Erfmdung. In anderen Worten, Fig, 3 zeigt ein Schaltungsbeispiel zur Umsetzung des "bipolaren" Aufwärtswandler-Konzepts. Der Spannungswandler 300 gemäß der Fig. 3 umfasst einen gesteuerten Gleichrichter 310, der den gesteuerten Gleichrichtern 110, 210 entspricht. Der gesteuerte Gleichrichter 310 weist einen ersten Eingangsanschluss 302 und einen zweiten Eingangsanschluss 304 auf. Der gesteuerte Gleichrichter 310 weist ferner einen ersten Ausgangsanschluss 312, und einen zweiten Ausgangsanschluss 314 auf. Eine Ladekapazität C4 ist mit dem ersten Ausgangsanschluss 312 und dem zweiten Ausgangsanschluss 314 des gesteuerten Gleichrichters 210 verbunden. Der Spannungswandler 300 umfasst ferner eine Spannungswandlerschaltung 320, die basierend auf der über dem Ladekondensator C4 anliegenden Gleichrichter - Ausgangsspannung VGL versorgt wird, und die beispielsweise ein im Hinblick auf ein Bezugspotential GND positives Ausgangspotential VOUT+ und, optional, ein im Vergleich zu dem Bezugspotential GND negatives Ausgangspotential VOUT- liefert. Die Spannungswandlerschaltung 320 umfasst beispielsweise einen DC/DC-Schaltregler 323, eine Induktivität 324, eine ausgangsseitige Einweggleichrichter-Diode 326 und einen ausgangsseitigen Ladekondensator 328. Die Spannungswandlerschaltung 320 ist beispielsweise ausgelegt, um den ausgangsseitigen Ladekondensator 328 über die ausgangsseitige Einweggleichrichter-Diode 326 basierend auf einem in der Induktivität 324 aufgebauten Strom zu laden, wodurch erreicht werden kann, dass das positive Ausgangspotential VOUT+ oberhalb des positiven Gleichrichter-Ausgangs-Potentials VIN+ (und auch oberhalb des Potentials VIN) liegt

Der DC/DC-Schaltregler 322 kann im Übrigen ein oder mehrere Steueranschlüsse aufweisen, die beispielsweise mit dem positiven Ausgangsanschluss 312 des gesteuerten Gleichrichters 310 oder mit einem Anschluss des ausgangsseitigen Ladekondensators 328 gekoppelt sind.

Der Spannungswandler 320 umfasst ferner, optional, eine Ladungspumpe 330, die ausgelegt ist, um basierend auf einer Ausgangswechselspannung des DC/DC-Schaltreglers (beispielsweise einer Ausgangswechselspannung, die gleichzeitig verwendet wird, um über die ausgangsseitige Einweggleichrichter-Diode 326 die Ausgangskapazität 328 zu laden) das negative Ausgangspotential VOUT- zu generieren.

Im Folgenden wird der gesteuerte Gleichrichter 310 sowie die zugehörige Ansteuerschaltung, in Form eines Komparators 340, näher erläutert. Der gesteuerte Gleichrichter 310 umfasst vier Dioden D1, D2, D3, D4, die zu einer Gleichrichter-Vollbrücke verschaltet sind. Eine erste Diode D1 ist zwischen den ersten Eingangsanschluss 302 und den ersten, positiven Gleichrichter-Ausgangsanschluss 312 geschaltet, wobei die Anode der ersten Diode D1 bei dem ersten Gleichrichter-Eingangsanschluss 302 ist und folglich die Kathode bei dem ersten Gleichrichter-Ausgangsanschluss 312 ist. Eine dritte Diode D3 ist zwischen den zweiten Gleichrichter-Eingangsanschluss 304 und den positiven Gleichrichter-Ausgangsanschluss 312 geschaltet, wobei die Anode der Diode D3 auf Seiten des zweiten Gleichrichter-Eingangsanschlusses 304 ist. Eine zweite Diode D2 ist zwischen den zweiten Gleichrichter-Eingangsanschluss 304 und den zweiten, negativen Gleichrichter-Ausgangsanschluss 314 geschaltet, wobei die Kathode der zweite Diode D2 auf der Seite des zweiten Gleichrichter-Eingangsanschlusses 304 ist. Eine vierte Diode D4 ist zwischen den ersten Gleichrichter-Eingangsanschluss 302 und den zweiten, negativen Gleichrichter-Ausgangsanschluss 314 geschaltet, wobei die Kathode der Diode D4 auf der Seite des ersten Gleichrichter-Eingangsanschlusses 302 ist.

Parallel zu der ersten Diode ist eine Drain-Source-Strecke eines ersten n-Kanal MOS-Feldeffekttransistors (auch kurz als "MOSFET" bezeichnet) T1 geschaltet. Parallel zu der dritten Diode D3 ist eine Drain-Source-Strecke eines dritten n-Kanal MOS-Feldeffekttransistors T3 geschaltet. Parallel zu der zweiten Diode D2 ist eine Drain-Source-Strecke eines zweiten n-Kanal MOS-Feldeffekttransistors T2 geschaltet. Parallel zu der vierten Diode D4 ist eine Drain-Source-Strecke eines vierten n-Kanal MOS-Feldeffekttransistors T4 geschaltet. Gate-Anschlüsse des ersten MOSFET T1 und des zweiten MOSFET T2 sind verbunden. Ebenso sind Gate-Anschlüsse des dritten MOSFET T3 und des vierten MOSFET T4 verbunden. Der Komparator 340 ist ausgelegt, um als Versorgungspotentiale das positive Ausgangspotential VOUT+ und das negative Ausgangspotential VOUT- zu empfangen, die beide durch die Spannungswandlerschaltung 320 erzeugt werden. Ein erster, nicht-invertierender Eingang (+) des Komparators 340 ist im Übrigen mit dem ersten Gleichrichter-Eingangsanschluss 302 verbunden, und ein zweiter, invertierender Eingang (-) des Komparators 340 ist mit dem zweiten Gleichrichter-Eingangsanschluss 304 verbunden. Somit ist der Komparator 314 in der Lage, Potentiale VIN1 und VIN2 zu vergleichen und somit festzustellen, ob die Eingangs-Gleichspannung VIN ein positives Vorzeichen oder ein negatives Vorzeichen aufweist. Ferner weist der Komparator 340 einen nicht-invertierten Ausgang (+) 342 und einen invertierten Ausgang 344 (-) auf. Der nicht-invertierende Ausgang 342 des Komparators 340 ist beispielsweise mit den Gate-Anschlüssen des ersten MOSFET T1 und des zweiten MOSFET T2 verbunden. Der invertierende Ausgang 344 des Komparators 340 ist beispielsweise mit den Gate-Anschlüssen des dritten MOSFET T3 und des vierten MOSFET T4 verbunden. Der Komparator 340 ist somit beispielsweise ausgelegt, um an die Gate-Anschlüsse des ersten MOSFET T1 und des zweiten MOSFET T2 ein Ansteuerpotential anzulegen, das nahe bei dem positiven Ausgangspotential VOUT+ liegt, falls die Polarität der Eingangsspannung VIN positiv ist. Somit wird die erste Diode D1 und die zweite Diode D2 in diesem Fall kurz beschlossen, so dass nur ein vergleichsweise geringer Spannungsabfall (typischerweise unterhalb von 200 mV) zwischen dem ersten Eingangsanschluss 302 und dem ersten Ausgangsanschluss 312 des geschalteten Gleichrichters 310 vorliegt, und so dass auch nur ein geringer Spannungsabfall (in derselben Größenordnung) zwischen dem zweiten Eingangsanschluss 304 und dem zweiten Ausgangsanschluss 314 des geschalteten Gleichrichters 310 anliegt. Gleichzeitig ist der Komparator 340 in diesem Fall ausgelegt, um an die Gate-Anschlüsse des dritten MOSFET T3 und des vierten MOSFET T4 Steuerpotentiale anzulegen, die den dritten MOSFET und den vierten MOOSFET ausschalten, beispielsweise Ansteuerpotentiale nahe bei dem negativen Ausgangspotential VOUT-. Ist hingegen die Polarität der Eingangsspannung VIN negativ, so legt der Komparator 340 typischerweise an die Gate-Anschlüsse des dritten MOSFET T3 und des vierten MOSFET T4 Ansteuerpotentiale in der Nähe des positiven Ausgangspotentials VOUT+ an, um den dritten MOSFET T3 und den vierten MOSFET T4 anzuschalten (in einen niederohmigen Zustand zu versetzen), so dass die dritte Diode D3 und die vierte Diode D4 überbrückt sind. Damit ergibt sich ein geringer Spannungsabfall zwischen dem zweiten Eingangsanschluss 304 des gesteuerten Gleichrichters 310 und dem ersten Ausgangsanschluss 312 des gesteuerten Gleichrichters 310. Ebenso ergibt sich ein geringer Spannungsabfall (geringer als die Flussspannung der Dioden D1-D4) zwischen dem ersten Eingangsanschluss 302 und dem zweiten Ausgangsanschluss 314 des gesteuerten Gleichrichters 310. Im Übrigen steuert der Komparator 340 im Falle einer negativen Polarität der Eingangsspannung VIN die Gates des ersten MOSFET T1 und des MOSFET T2 an, um den ersten MOSFET T1 und den zweiten MOSFET T2 auszuschalten (in einen hochohmigen Zustand zu versetzen).

Welche Potentiale zum Ausschalten der jeweils auszuschaltenden MOSFETs wünschenswert sind, hängt von der Art der MOSFETs ab. In manchen Fällen kann es ausreichend sein, an diese das Bezugspotential GND anzulegen. In diesem Fall kann die Bereitstellung des negativen Ausgangspotentials VOUT- entfallen.

Zusammenfassend ist somit festzuhalten, dass die Fig. 3 ein Ausführungsbeispiel des beschriebenen erfmdungsgemäßen Konzepts zeigt. Die Schaltelemente des Gleichrichters 310 sind hier als MOS-Transistoren T1-T4 ausgeführt. Als Aufwärtswandler kommt ein DC/DC-Schaltregler 322 (in Verbindung mit der Induktivität 324 und einer ausgangsseitigen Einweg-Gleichrichtung 326, 328) zum Einsatz. Über eine einfache Ladungspumpe 330 kann (optional) die negative Betriebsspannung (negatives Ausgangspotential VOUT-) für den Komparator 340 aus dem Ausgangssignal 323 des Schaltreglers 322 erzeugt werden. Bei ausreichender Dimensionierung der Ladungspumpe 330 kann die gesamte Schaltungsanordnung 300 beispielsweise auch als duale Spannungsquelle, z.B. für Operationsverstärker, dienen.

### Zeitliche Abläufe beim Betrieb des Spannungswandlers

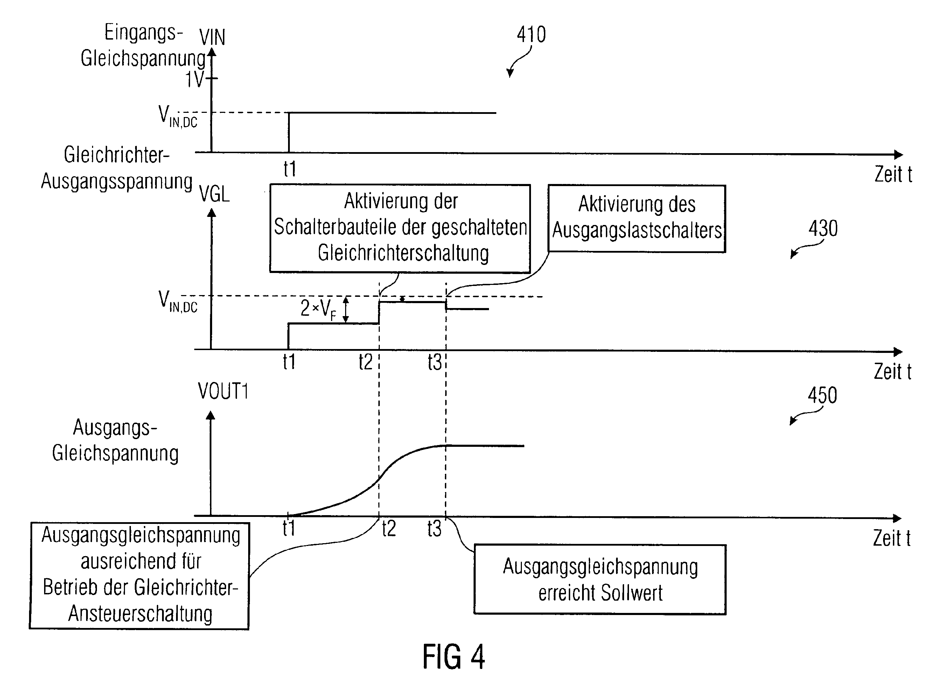

Im Folgenden werden die zeitlichen Abläufe beim Betrieb des Spannungswandlers Bezug nehmend auf die Fig. 4 näher erläutert. Fig. 4 zeigt zu diesem Zweck eine grafische Darstellung dieser zeitlichen Abläufe.

Allgemein ist festzuhalten, dass die Funktionsweise des erläuterten Konzepts sich in eine "Start"-Phase und eine "Betriebs"-Phase gliedert. In der Start-Phase sind nur die Dioden der Gleichrichterschaltung aktiv. Da reale Dioden eine bestimmte Vorwärtsspannung (bzw. Flussspannung) VF aufweisen, ist hier die Ausgangsspannung VGL des Gleichrichters etwa um ihren doppelten Betrag (2*VF) geringer als die Eingangsspannung VIN. Die Ausgangsspannung VGL des Gleichrichters 210, 310 muss jedoch lediglich ausreichend sein, damit der DC/DC-Wandler die Versorgungsspannungen für den Komparator 230, 340 bereitstellen kann.

In der Betriebsphase ist der Komparator 230, 340 aktiv und er kann nun die Schalter 210B, T1, T2, T3, T4 in der Gleichrichterbrücke so ansteuern, dass die leitenden Dioden (210A; bzw. das gerade in Vorwärtsrichtung gepolte Diodenpaar der Dioden D1, D2, D3, D4) kurzgeschlossen werden und so annähernd keine Verluste mehr durch ihre Vorwärtsspannung (VF) auftreten. So wird der DC/DC-Wandler mit annähernd dem ― bis auf etwaige Spannungsverluste über die Schaltelemente 210B, T1, T2, T3, T4) ― gleichen Betrag der Eingangsspannung des Gleichrichters versorgt. In anderen Worten, der Betrag der Spannung VGL entspricht annähernd dem Betrag der Eingangsspannung VIN. Um zu vermeiden, dass in der Start-Phase die Eingangsspannung des Wandlers zu stark einbricht, sollte in dieser Phase keine Last am Ausgang des Aufwärtswandlers anliegen. Dies kann beispielsweise durch ein optionales zusätzliches Schaltelement 360 erreicht werden, das die Last erst in der Betriebsphase zuschaltet.

Bezug nehmend nun auf die Fig. 4, zeigt diese eine erste grafische Darstellung 410, dass die Eingangsspannung VIN bzw. VIN,DC zu einem Einschaltzeitpunkt t1 eingeschaltet wird. Eine zweite grafische Darstellung 430 lässt erkennen, dass die Gleichrichter-Ausgangsspannung VGL praktisch unmittelbar nach dem Einschaltzeitpunkt t1 (bei anderen Ausführungsbeispielen aber etwas verzögert) einen Wert erreicht, der etwa um die doppelte Vorwärtsspannung bzw. Flussspannung der Dioden D1-D4 unter dem Betrag der Eingangs-Gleichspannung VIN liegt. Die Last ist derweil noch von dem Ausgang der Spannungswandlerschaltung abgetrennt.

Eine grafische Darstellung 450 lässt erkennen, dass die Ausgangs-Gleichspannung, beispielsweise VOUT1, ab dem Zeitpunkt t1 ansteigt. Die Ausgangs-Gleichspannung VOUT1 erreicht beispielsweise zu dem Zeitpunkt t2 einen Wert, der ausreichend für den Betrieb der Gleichrichter-Ansteuerschaltung, also beispielsweise des Komparators 230, 340, ist. Zu diesem Zeitpunkt aktiviert die Gleichrichter-Ansteuerschaltung die einzuschaltenden Schalterbauteile, beispielsweise die MOSFETs T1, T2, der geschalteten Gleichrichterschaltung 210, 310. Damit steigt die Gleichrichter-Ausgangsspannung VGL deutlich an, da somit der zuvor herrschende Spannungsabfall an dem zuvor leitenden Dioden D1,D2 verringert bzw. zumindest annäherungsweise eliminiert wird. So ist ersichtlich, dass nach dem Zeitpunkt t2 der Betrag der Gleichrichter-Ausgangsspannung VGL nahezu den Betrag der Eingangs-Gleichspannung VIN erreicht. Jedenfalls unterscheidet sich der Betrag der Gleichrichter-Ausgangsspannung VGL nach dem Zeitpunkt t2, zu dem die Schalterbauteile T1, T2 der geschalteten Gleichrichterschaltung aktiviert werden, um weniger als das doppelte der Vorwärtsspannung der Dioden D1-D4 von dem Betrag der Eingangs-Gleichspannung VIN.

Zu einem Zeitpunkt t3 erreicht im Übrigen die Ausgangs-Gleichspannung, beispielsweise die positive Ausgangsspannung VOUT1, ihren Sollwert. Zu diesem Zeitpunkt wird beispielsweise das optionale Schaltelement 360 aktiviert, so dass eine Last mit dem Ausgang des Spannungswandlers verbunden wird. Zu diesem Zeitpunkt t3 kann beispielsweise die Gleichrichter-Ausgangsspannung VGL aufgrund der sich ergebenden erhöhten Belastung der Spannungswandlerschaltung leicht einbrechen, wie dies in der grafischen Darstellung 430 gezeigt ist.

Im Übrigen sei darauf hingewiesen, dass die Zeitpunkte t2 und t3 auch zusammenfallen können. Im Übrigen können die Übergänge zwischen den verschiedenen Betriebszuständen in einem Ausführungsbeispiel auch weniger abrupt, sondern vielmehr fließend sein.

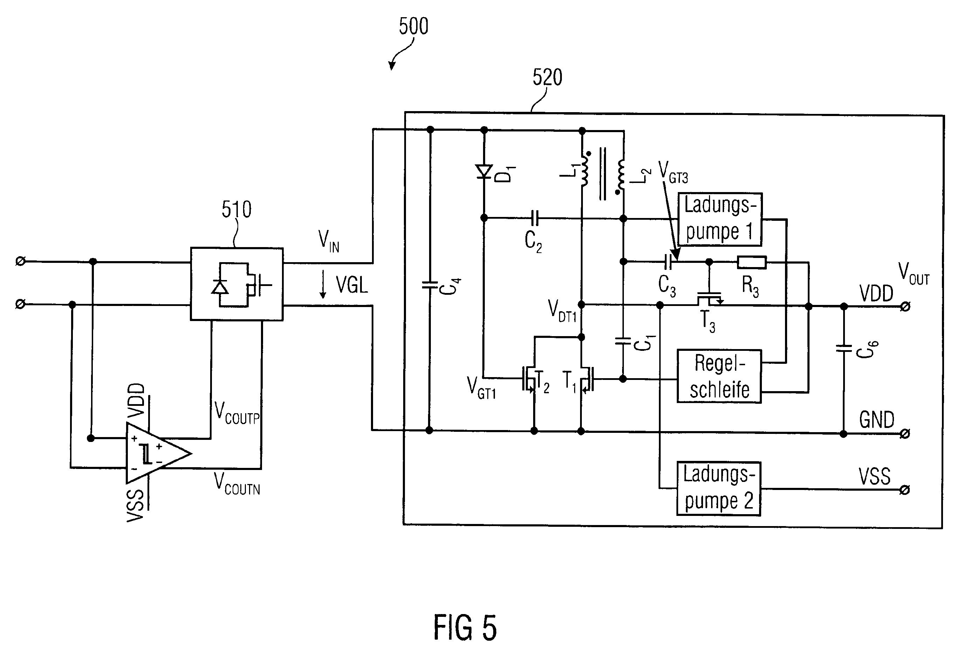

### Ausführungsbeispiel gemäß der Figur 5

Fig. 5 zeigt ein Blockschaltbild eines DC/DC-Wandlers mit einem Eingangs-Polaritäts-Detektor für Thermogeneratoren. Fig. 5 zeigt also einen DC/DC-Wandler, der automatisch die Polarität seiner Eingangsspannung detektiert. Der Konverter arbeitet somit sowohl mit positiven als auch mit negativen Eingangsspannungen. Der DC/DC-Wandler ist für den Einsatz durch Energie-erntende Thermogeneratoren mit Ausgangsspannungen unterhalb von 300 mV gedacht, wobei sich die heiße und die kalte Seite vertauschen können.

Der vorliegende, in der Figur 5 gezeigte DC/DC-Wandler basiert auf einem vorherigen DC/DC-Wandler-Entwurf, der in der Veröffentlichung "Step-up DC/DC-Converter with coupled inductors for low input voltages" von M. Pollak, D. Mateu und P. Spies (veröffentlicht im: Power MEMS 2008, Seiten 145-148) beschrieben wurde, mit einer hohen Effizienz von 70% bei 250 mV Eingangsspannung.

Fig. 5 zeigt ein Blockschaltbild der neuen Schaltung. Die Eingangsstufe des Aufwärtswandlers ist eine Gleichrichterbrücke 510, die eine positive Eingangsspannung an die nächste Stufe liefert. Da Schottky-Dioden eine Vorwärtsspannung in dem Bereich von 300 mV aufweisen - d.h. in dem Bereich der Ausgangsspannung eines Energie-erntenden Thermogenerators - müssten Schottky-Dioden mit geringen Vorwärtsspannungen für den Gleichrichter verwendet werden. Solche Dioden haben einen hohen Leckstrom in der Rückwärtsrichtung. In dem neuen Entwurf sind sie mit MOS-Transistoren parallel geschaltet, die die Dioden in der Arbeitsphase des Wandlers kurzschließen. Somit ist der Leckstrom begrenzt und kann den Wirkungsgrad der Gesamtschaltung nicht wesentlich verschlechtern. In anderen Worten, bei dem erfindungsgemäßen Spannungswandler kann davon abgesehen werden, solche Dioden mit besonders niedrigen Vorwärtsspannungen einzusetzen.

Der vollständige "bipolare" DC/DC-Wandler wurde auf einer ersten Prototypen-Leiterplatte unter Verwendung von diskreten Bauteilen aufgebaut. Dieser Konverter unterscheidet sich von einem vorherigen Design, wie es in der oben genannten Veröffentlichung beschrieben wurde, und bei dem ein JFET-Transistor (Sperrschicht-Feldeffekttransistor) für die Start-Phase verwendet wurde. In dem neuen Entwurf erfüllt ein MOSFET T2 mit Schwellspannung 0 und mit einem An-Widerstand von ungefähr 500 Ohm diese Aufgabe. Aufgrund der geringen Amplitude der Oszillation beim Start hilft eine erste Ladungspumpe (Ladungspumpe 1) dem Transistor T1 gemäß der Fig. 5, leitfähig zu werden. Der Transistor T1 hat einen viel geringeren An-Widerstand als der Transistor T2, aber eine höhere Schwellspannung von ungefähr 700 mV. Eine zweite Ladungspumpe (Ladungspumpe 2) wird benötigt, um eine negative Ausgangsspannung von dem Wandler zu erhalten. Mit den positiven und negativen Ausgangsspannungen (VDD und VSS) wird ein Vergleicher ("Komparator") 540 versorgt, der die Polarität der Eingangsspannung des Gleichrichters 510 detektiert. Die zwei Ausgangsspannungen des Vergleichers liefern die nötige Spannung, um die MOSFETs, die zu den Dioden in der Gleichrichterbrücke 510 parallel geschaltet sind, zu schalten. Als Folge dessen werden geringe Leistungsverluste bei dem Gleichrichter und eine hohe Effizienz der Gesamtschaltung erreicht. Eine Effizienz von 65% wurde für eine Eingangsspannung von 200 mV und eine Ausgangsspannung von 2,5 V mit einer Ausgangsleistung von 4 mW für einen Test-Entwurf gemessen.

Zusammenfassend lässt sich festhalten, dass anhand der Fig. 5 ein Blockschaltbild eines bipolaren DC/DC-Wandlers gezeigt wurde.

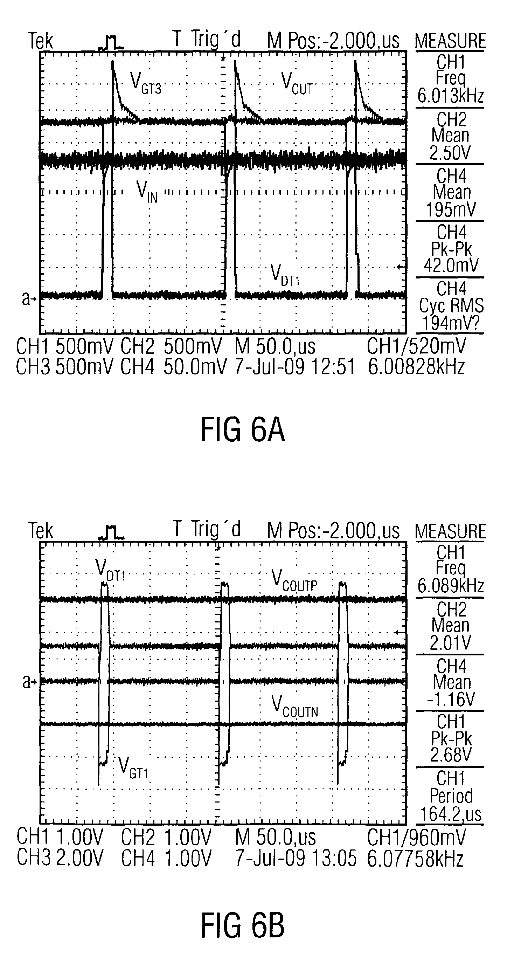

Fig. 6A zeigt im Übrigen eine grafische Darstellung von Signalen des bipolaren DC/DC-Wandlers gemäß der Fig. 5 in einer Arbeitsphase, jeweils bezogen auf das Referenzpotential GND. Die Fig. 6B zeigt ferner eine weitere grafische Darstellung von Signalen des bipolaren DC/DC-Wandlers gemäß der Fig. 5 in einer Arbeitsphase, bezogen auf das Bezugspotential GND.

### Verfahren zum Betrieb eines Gleichspannung-zu-Gleichspannung-Spannungswandlers

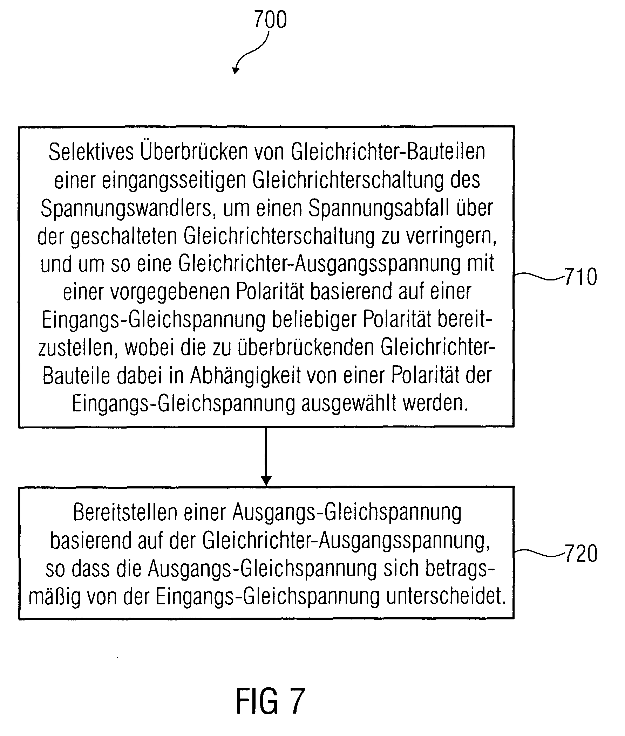

Fig. 7 zeigt ein Flussdiagramm eines Verfahrens zum Betrieb eines Gleichspannung-zu-Gleichspannung-Spannungswandlers, gemäß einem Ausführungsbeispiel der vorliegenden Erfindung.

Das Verfahren 700 gemäß Fig. 7 umfasst einen Schritt 710 des selektiven Überbrückens von Gleichrichter-Bauteilen einer eingangsseitigen Gleichrichterschaltung des Spannungswandlers, um einen Spannungsabfall über der geschalteten Gleichrichterschaltung zu verringern, und um so eine Gleichrichter-Ausgangsspannung mit einer vorgegebenen Polarität basierend auf einer Eingangs-Gleichspannung beliebiger Polarität bereitzustellen. Die zu überbrückenden Gleichrichter-Bauteile werden dabei in Abhängigkeit von einer Polarität der Eingangs-Gleichspannung ausgewählt.

Das Verfahren 700 umfasst ferner einen Schritt 720 des Bereitstellens einer Ausgangs-Gleichspannung basierend auf der Gleichrichter-Ausgangsspannung, so dass die Ausgangs-Gleichspannung sich betragsmäßig von der Eingangs-Gleichspannung unterscheidet.

Das Verfahren 700 gemäß Fig. 7 kann auch um all diejenigen Schritte und Funktionalitäten ergänzt werden, die im Hinblick auf die erfindungsgemäßen Vorrichtungen beschrieben sind.

### Folgerungen

Die Ausführungsbeispiele gemäß der vorliegenden Erfindung schaffen einen polaritätsunabhängigen DC/DC-Aufwärts-Wandler. Der beschriebene Aufwärts-Wandler kann durch einen verlustarmen Gleichrichter für Eingangs-Gleichspannungen beliebiger Polarität verwendet werden, er kann mit sehr niedrigen Eingangsspannungen betrieben werden und ist damit besonders interessant für einen Einsatz in Verbindung mit Thermogeneratoren, die den Seebeck-Effekt nutzen.

Der vorliegende Aufwärts-Wandler kann im Übrigen vorteilhaft in Verbindung mit leistungsoptimierten Systemen eingesetzt werden.

Im Folgenden werden kurz Vorteile der besonderen technischen Merkmale des Erfindungskonzepts erläutert. Das vorgeschlagene Schaltungskonzept bietet eine Möglichkeit, Energiewandler mit sehr niedrigen Ausgangsspannungen unabhängig von ihrer Polarität in eine höhere Spannung umzusetzen. Dies ist besonders interessant für Thermogeneratoren, die eine Ausgangsspannung abhängig von der Richtung ihres Temperaturgradienten liefern sollen. Wird die eine Seite eines solchen Generators an einem Punkt konstanter Temperatur - beispielsweise am menschlichen Körper - angebracht, und unterliegt die andere Seite starken Temperaturschwankungen, kann unabhängig davon, welche Seite kälter bzw. wärmer ist, Energie aus der Temperaturdifferenz gewonnen werden. Insgesamt lässt sich sagen, dass die vorgeschlagenen Aufwärtswandler unabhängig von seiner Eingangspolarität (beispielsweise einer von einem Thermogenerator gelieferten Spannung) betrieben werden kann. Die Aufwärtswandler kommen mit wenigen Bauteilen aus und zeichnen sich durch geringste Verluste aus.

Im Folgenden werden einige Alternativlösungen kurz beschrieben. Eine Alternativlösung könnte beispielsweise darin bestehen, ohne den genannten DC/DC-Wandler auszukommen. Da die gesamte Schaltung aber, wie erwähnt, typischerweise (aber nicht notwendigerweise) nur mit einer Gleichspannung betrieben werden kann, braucht man im Regelfall trotzdem eine Wandlerschaltung, die daraus eine höhere Gleichspannung erzeugt.

Im Übrigen gibt es Alternativlösungen, bei denen die MOSFETs parallel zu den Dioden im Gleichrichter durch andere Schaltelemente ersetzt sind, z.B. durch Relais (z.B. mikromechanische Relais), Thyristoren oder Ähnliches. Im übrigen können anstelle von MOS-Feldeffekttransistoren andersartige Feldeffekttransistoren oder Bipolartransistoren verwendet werden. Auch ist es möglich, antatt von n-Kanal FETs p-Kanal Fets zu verwenden, und umgekehrt. Auch die Gleichrichterdioden können durch andere gleichrichtende Bauteile ersetzt werden. I m Übrigen kann natürlich die Polarität der Spannungen bzw. Potentiale verändert werden, und das Bezugspotential kann anders gewählt werden. Auch die Topologie der Spannungswandlerschaltung kann in weiten Grenzen variiert werden.

Im Folgenden werden noch einmal kurz wichtige Merkmale dargestellt, die bei einem bevorzugten Ausführungsbeispiel der Erfindung in Kombination vorliegen können:
- eine Brückengleichrichterstruktur, bei der parallel zu ihren Dioden (oder Gleichrichterbauteilen) Schalter angeordnet sind;
- die Schalter werden dabei abhängig vom Ausgangssignal des Energiewandlers durch einen analogen Verstärker (oder einen Komparator) angesteuert; und
- dieser Verstärker wird über den Ausgang eines Aufwärts-Wandlers, der wiederum an den Ausgang des Gleichrichters gekoppelt ist, mit Spannung versorgt.

Im Folgenden werden noch kurz einige technische Anwendungsgebiete gezeigt. Ausführungsbeispiele gemäß der Erfindung sind besonders geeignet für Energiewandler, die (beispielsweise als Eingangs-Gleichspannung VIN) niedrige Ausgangsspannungen mit unterschiedlicher Polarität liefern.

Ausführungsbeispiele gemäß der Erfindung können daher bestens für Thermogeneratoren, die den Seebeck-Effekt ausnutzen, verwendet werden. Als eine weitere Anwendung der Schaltung kann man sich einen Verpolungsschutz für Batterien vorstellen, falls dafür ein Aufwärts-Wandler vorgesehen ist. Dabei sorgt der Gleichrichter dafür, dass die Ausgangsspannung immer die richtige Polarität hat, egal wie die Batterie angeschlossen wird.

## Patentansprüche

1. Ein Gleichspannung-zu-Gleichspannung-Spannungswandler (100, 200, 300, 500) zum Bereitstellen einer Ausgangs-Gleichspannung (VOUT) basierend auf einer Eingangs-Gleichspannung (VIN), mit folgenden Merkmalen:
einer eingangsseitigen geschalteten Gleichrichterschaltung (110, 210, 310, 510), die ausgelegt ist, um basierend auf der Eingangs-Gleichspannung und unabhängig von einer Polarität der Eingangs-Gleichspannung eine Gleichrichter-Ausgangsspannung (VGL) mit einer vorgegebenen Polarität bereitzustellen, wobei die geschaltete Gleichrichterschaltung durch Schalterbauteile (110b; 210b; T1-T4) überbrückbare Gleichrichter-Bauteile (110a, 210a, D1-D4) aufweist; und
einer Spannungswandlerschaltung (120; 220; 320; 520), die ausgelegt ist, um die Ausgangs-Gleichspannung basierend auf der Gleichrichter-Ausgangsspannung bereitzustellen.

2. Der Spannungswandler (100; 200; 300; 500) gemäß Anspruch 1, wobei die Spannungswandlerschaltung (120; 220; 320; 520) eine Aufwärts-Spannungswandlerschaltung ist, die ausgelegt ist, um die Ausgangs-Gleichspannung (VOUT) so bereitzustellen, dass die Ausgangs-Gleichspannung betragsmäßig größer ist als die Eingangs-Gleichspannung (VIN).

3. Der Spannungswandler (100; 200; 300; 500) gemäß Anspruch 2, wobei die Spannungswandlerschaltung (120; 220; 320; 520) ausgelegt ist, um die Ausgangs-Gleichspannung (VOUT) bereits bei einer Eingangs-Gleichspannung (VIN) mit einem Betrag von nicht mehr als ein Volt bereitzustellen.

4. Spannungswandler (100; 200; 300; 500) gemäß einem der Ansprüche 1 bis 3, wobei die Gleichrichterschaltung (110; 210; 310; 510) eine Gleichrichterbrücke umfasst, die zwischen Zuführungen (202, 204; 302, 304) für die Eingangs-Gleichspannung (VIN) und Leitungen (312, 314) für die Gleichrichter-Ausgangsspannung (VGL) geschaltet ist,
wobei Brückenzweige der Gleichrichterbrücke jeweilige Dioden (110a; 210a; D1-D4) umfassen, und wobei die Brückenzweige steuerbare Schalterbauteile (110b; 210b; T1-T4) umfassen, die ausgelegt sind, um jeweilige Dioden in schaltbarer Weise zu überbrücken, um im eingeschalteten Zustand einen Spannungsabfall über dem Brückengleichrichter im Vergleich zu einem ausgeschalteten Zustand zu verringern.

5. Spannungswandler (100; 200; 300; 500) gemäß Anspruch 4, wobei die Schalterbauteile (110b; 210b; T1-T4) der Gleichrichterschaltung (110; 210; 310; 510) selbstsperrende MOS-Feldeffekttransistoren sind, und
wobei der Spannungswandler eine Gleichrichter-Ansteuerschaltung (230; 340) umfasst, die ausgelegt ist, um in Abhängigkeit von einer Polarität der Eingangs-Gleichspannung (VIN) MOS-Feldeffekttransistoren (T1, T2) in zwei der Brückenzweige, die einer ersten Polarität der Eingangs-Gleichspannung zugeordnet sind, oder MOS-Feldeffekttransistoren (T3, T4) in zwei anderen der Brückenzweige, die einer zweiten Polarität der Eingangs-Gleichspannung zugeordnet sind, in einen eingeschalteten Zustand zu versetzen.

6. Spannungswandler (100; 200; 300; 500) gemäß Anspruch 5, wobei die Gleichrichter-Ansteuerschaltung (230; 340) ausgelegt ist, um von der Spannungswandlerschaltung (120; 220; 320; 520) eine auf der Gleichrichter-Ausgangsspannung (VGL) basierende Versorgungsspannung (VOUT+, VOUT-) zu empfangen, so dass ein Versorgungspotenzial (VOUT+) der Gleichrichter-Ansteuerschaltung oberhalb von an den Eingangs-Gleichspannungs-Zuführungen anliegenden Potenzialen (VIN1, VIN2) ist, oder so dass ein Versorgungspotenzial (VOUT-) der Gleichrichter-Ansteuerschaltung unterhalb der an den Eingangs-Gleichspannungs-Zuführungen anliegenden Potenziale (VIN1, VIN2) ist, und
wobei die Gleichrichter-Ansteuerschaltung ausgelegt ist, um an einem Steueranschluss eines einzuschaltenden MOS-Feldeffekttransistors (T1), der als steuerbares Schalterbauteil eines der Brückenzweige wirkt, ein Ansteuerpotenzial anzulegen, das oberhalb der an den Eingangs-Gleichspannungs-Zuführungen anliegenden Potenziale oder unterhalb der an den Eingangs-Gleichspannungs-Zuführungen anliegenden Potenziale liegt.

7. Spannungswandler (100; 200; 300; 500) gemäß einem der Ansprüche 4 bis 6, wobei der Spannungswandler eine Gleichrichter-Ansteuerschaltung (230; 340) umfasst,
wobei die Gleichrichter-Ansteuerschaltung einen Komparator aufweist, der ausgelegt ist, um eine Polarität der Eingangs-Gleichspannung (VIN) zu bestimmen und der ferner ausgelegt ist, um ein erstes Paar (T1, T2) der steuerbaren Schalter (T1-T4) in zwei der Brückenzweige, die der ersten Polarität der Eingangs-Gleichspannung zugeordnet sind, und ein zweites Paar (T3, T4) der steuerbaren Schalter (T1-T4) in zwei der Brückenzweige, die der zweiten Polarität der Eingangs-Gleichspannung zugeordnet sind, über zwei zueinander invertierte Komparatorausgänge (230a, 230b) anzusteuern.

8. Spannungswandler (100; 200; 300; 500) gemäß einem der Ansprüche 1 bis 7, wobei der Spannungswandler so ausgelegt ist, dass die geschaltete Gleichrichterschaltung (110, 210, 310, 510) in einer Anlaufphase als ungeschaltete Gleichrichter-Schaltung wirkt, und so dass die geschaltete Gleichrichter-Schaltung nach der Anlaufphase als geschaltete Gleichrichter-Schaltung wirkt.

9. Spannungswandler (100; 200; 300; 500) gemäß Anspruch 8, wobei die geschaltete Gleichrichter-Schaltung (110; 210; 310; 510) ausgelegt ist, um die Gleichrichter-Ausgangsspannung (VGL) über Dioden (D1-D4) basierend auf der Eingangs-Gleichspannung (VIN) bereitzustellen, wobei die Dioden (D1-D4) durch Schalterbauteile (T1-T4) überbrückbar sind;
wobei der Spannungswandler so ausgelegt ist, dass die Schalterbauteile (T1-T4) in einer Anlaufphase des Spannungswandlers inaktiv sind, so dass in der Anlaufphase ein Anlaufphasen-Spannungsabfall über in der Anlaufphase leitende Dioden der geschalteten Gleichrichterschaltung entsteht; und
wobei der Spannungswandler so ausgelegt ist, dass die Schalterbauteile nach der Anlaufphase des Spannungswandlers aktiv sind, um nach der Anlaufphase zu einer Verringerung eines Spannungsabfalls über der geschalteten Gleichrichter-Schaltung beizutragen.

10. Der Spannungswandler (100; 200; 300; 500) gemäß Anspruch 8 oder Anspruch 9,
wobei der Spannungswandler einen ausgangsseitigen Schalter (360) aufweist, der ausgelegt ist, um den Spannungswandler ausgangsseitig von einer Nutzlast abzutrennen, und
wobei der Spannungswandler so ausgelegt ist, dass in der Anlaufphase der ausgangsseitige Schalter (360) geöffnet ist, und
wobei der Spannungswandler ausgelegt ist, um den ausgangsseitigen Schalter erst dann zu schließen, wenn eine durch die Spannungswandlerschaltung (120; 220; 320; 520) bereitgestellte Versorgungsspannung (VOUT+,VOUT-) ausreichend ist, um eine Ansteuerschaltung zur Ansteuerung der Schalterbauteile der geschalteten Gleichrichter-Schaltung zu betreiben, um die Schalterbauteile zu aktivieren.

11. Der Spannungswandler (100; 200; 300; 500) gemäß Anspruch 10, wobei die Ansteuerschaltung (230; 340) der geschalteten Gleichrichter-Schaltung (210; 310) ausgelegt ist, um Ansteuersignale für die Schalterbauteile basierend auf der durch die Spannungswandlerschaltung (120; 220; 320; 520) bereitgestellte Versorgungsspannung (VOUT+, VOUT-) bereitzustellen.

12. Der Spannungswandler (100; 200; 300; 500) gemäß einem der Ansprüche 1 bis 11, wobei der Spannungswandler eine Ansteuerschaltung (230, 340) für die geschaltete Gleichrichter-Schaltung (110; 210; 310; 510) umfasst,
wobei die Ansteuerschaltung einen Komparator aufweist, dessen Eingänge mit Anschlüssen (202, 204; 302, 304) für die Eingangs-Gleichspannung (VIN) verbunden sind, und dessen Ausgänge mit Steueranschlüssen von Schalterbauteilen (T1-T4) der geschalteten Gleichrichter-Schaltung verbunden sind.

13. Spannungsversorgungsschaltung, mit folgenden Merkmalen:
einem Spannungswandler (100; 200; 300; 500) gemäß einem der Ansprüche 1 bis 12; und
einem Energiewandler, der ausgelegt ist, um die Eingangs-Gleichspannung für den Spannungswandler zu liefern, wobei der Energiewandler so ausgelegt ist, dass eine Polarität der Eingangs-Gleichspannung abhängig von Umwelteinflüssen ist.

14. Die Spannungsversorgungsschaltung gemäß Anspruch 13, wobei der Energiewandler ein Thermogenerator ist, und wobei der Thermogenerator so ausgelegt ist, dass eine Polarität der Eingangs-Gleichspannung abhängig von einer Richtung eines an dem Thermogenerator anliegenden Temperaturgradienten ist.

15. Verfahren (700) zum Betrieb eines Gleichspannung-zu-Gleichspannung-Spannungswandlers, mit folgenden Schritten:
selektives Überbrücken von Gleichrichter-Bauteilen einer eingangsseitigen Gleichrichter-Schaltung des Spannungswandlers, um einen Spannungsabfall über der geschalteten Gleichrichter-Schaltung zu verringern, und um so eine Gleichrichter-Ausgangsspannung mit einer vorgegebenen Polarität basierend auf einer Eingangs-Gleichspannung beliebiger Polarität bereitzustellen,
wobei die zu überbrückenden Gleichrichter-Bauteile in Abhängigkeit von einer Polarität der Eingangs-Gleichspannung ausgewählt werden; und
Bereitstellen einer Ausgangs-Gleichspannung basierend auf der Gleichrichter-Ausgangsspannung, so dass die Ausgangs-Gleichspannung sich betragsmäßig von der Eingangs-Gleichspannung unterscheidet.
